# EUROPEAN PATENT APPLICATION

(11) **EP 3 090 852 A1**
(43) Date of publication of application: **09.11.2016**
(21) Application number: 14844841.8
(22) Date of filing: 21.08.2014
(51) Int. Cl.: B29B 9/14, C08L 1/00, C09F 1/00, C04B 35/52, D04H 1/00, B29C 45/14, B29C 39/02, B29C 44/06, D02G 3/00, B29C 45/00, E04C 2/10

(54) **METHOD FOR PRODUCING COMPOSITE MATERIAL, AND COMPOSITE MATERIAL**

(30) Priority: 13.09.2013 BR 102013023583
(71) Applicant: Ricciardi, José Carlos, 13213-254 Jundiaí - SP (BR)
(72) Inventor: Ricciardi, José Carlos, 13213-254 Jundiaí - SP (BR)
(74) Representative: Burt, Matthew Thomas
(86) International application number: PCT/BR2014/000286
(87) International publication number: WO 2015/035482

(57) **Abstract**

The present invention relates to a new method for producing composite material (1) provided with a finishing surface (12) and a backing surface (13), which comprises the following steps: step (i), contact heating of at least one blanket layer (11) that includes natural fibres mixed with synthetic fibres, or heating up to at least a temperature at which the synthetic fibres soften; step (ii), placing of the blanket layer (11) heated in step (i) in the cavities of a mould, followed by pressing; step (iii), cooling of the blanket layer (11) moulded in step (ii) to at least a temperature at which the finishing surface (12) hardens; step (iv), injection of plastic resin to form recesses or structural portions in predefined regions in the backing surface (13); and step (v), cooling of the assembly obtained in step (iv) to at least a hardening temperature.

## Description

The present invention relates to the field of materials and structures and discloses a material composed by natural fibers mixed with polypropylene fibers to be applied in a press-molding process, followed by a second operation of injecting plastic resin.

### Description of the prior art

At present, there are various solutions of materials and processes developed for structural application, among them those used for coating automobiles, aircraft, structures of civil engineering and shipbuilding, among others. Such elements, when aggregated, are capable of providing different properties and characteristics according to the need and application for which they are intended. Such materials may be called composite materials.

In essence, these composite materials applied in structures and coatings are presently manufactured from at least a few of the following elements:
- Fibers;
- Resin or matrix;
- Hardeners or resin curing agents;
- Demolding agents.

It is opportune to say that composite materials are defined as being materials formed from two or more constituents with different compositions, structures and properties and that are separated by one or more interfaces. The main objective in producing composite materials is that of combining different materials to produce a piece having properties superior to those of the separate components.

Additionally, the properties of the composites are controlled chiefly by the properties of their constituents, their distribution, dispersion, interaction thereof with a matrix, as well as their shape and size. At the moment when one gets to know the individual properties of each material and the manner how they interact with each other, one can design a material ideal for a given application. Additionally, composite materials are also designed to meet applications that need a set of specific properties, be they structural, thermal, electrical, tribological or optical, among others.

For this reason, the methods and processes of manufacturing this type of materials for structural application have fundamental importance in the definition of the physical properties of the final product. Among the various methods available, the most pertinent to the present invention will be described in greater detail hereinafter.

It should be further noted that, depending on the application for which the piece is intended, it is often necessary that it should have strengthening points of fixation regions, injected plastic resin being usually employed for this purpose.

Taking as an example the production of the inner lining of an automobile door, where one of the portions faces the internal part of the door and the other portion, provided with finish, faces the automobile interior, one of the processes available relates to overmolding simultaneous with the molding. This process consists in injecting plastic resin immediately after the pressing has been completed (closure of the press), making use of an injection system coupled to the press.

However, this process has various drawbacks, such as the need to have a complex mold, since it incorporates all the requirements for molding (Coating feeding system, System for negative shaping, if any, System for feeding natural fiber web) and all the requirements for injection (Outlet angle, Extraction, Cooling, Injection System).

Thus, the molds for meeting all these requirements call for longer Design time, larger dimensions and weight, longer construction time and high cost for construction and maintenance. Moreover, the coating materials for this process must have higher resistance to heat and pressure, in order to prevent marks of overmolded regions in the external (visible) area.

There is also limitation as to the materials and finishes to be used, as well as difficulty in obtaining the feeling of softness, which is virtually impossible nowadays and very subtle for this process.

Finally, besides the high refuse resulting from this process, the production cycles are greater and, due to all the constructive difficulties, production with more than one cavity is not feasible, which results in low productivity and higher cost/piece.

Another prior-art process is achieved by overmolding while coating. This process consists in inserting the coating material into the mold in a conventional injection process, so that the injection can be made on it. In this case, the whole component is injected, not parts thereof, as in the above-described process.

Usually this process is applied to fabrics, vinyl or olefin laminates, ABS rigid laminates, polycarbonate, TPO, etc. One observes that, in the case of fabrics, the molds are conventional Injection molds provided with an injection system that minimizes the internal pressure in the cavity during the injection and also with a system for fixing the fabrics. It should be noted that the fabrics for this application must be provided with bases that prevent migration of the injected plastic to the outer surface, which would cause a disagreeable visual effect.

Thus, fabrics must have a minimum lengthening intended to stand stretching and may not have thick foams so as not to compromise the appearance after injection. So, the dimensions of theses blanks (both Natural Fibers and the coated ones, are the materials cut in the size and shape necessary for manufacturing the products) of these fabrics have to be larger than in other alternatives, so that one can obtain the coated piece. An identical problem occurs when vinyl or olefin laminates are used.

When overmolding is carried on rigid laminates, the molds also have to be provided with Injections systems that generate low internal pressure in the cavity, a system for generating vacuum being also necessary to support the laminate, compulsorily shaped in another parallel process. The laminate, in turn, must be vacuum-shaped, with the drawback that the adjustment of the mold is quite complex and the consumption of laminate is high.

Until the present moment, no solution has been found to enable one to achieve, in harmony with an optimized manufacture process, a composite material that is commercially viable and capable of being shaped in complex geometries, without expensive molds, which is capable of transforming the molded product into applicable natural fiber, competitive in areas where the need for fixing elements or structural characteristics is a limiting and too expensive factor, because they are too complex for unmolding.

### Objectives of the invention

Therefore, it is an objective of the present invention to provide a process for manufacturing a composite material based on natural fibers mixed with polypropylene fibers, this material also having fixing elements or structural characteristics obtained through a step of injecting plastic resin applied after the step of molding the composite material.

It is also an objective of the present invention to provide a process for manufacturing composite material having fixing elements or structural characteristics, this process being capable of reducing the amount of material used and the complexity of the mold, resulting in reduction of the cost of the final product.

Finally, it is an objective of the present invention to provide a composite material having fixing elements or structural characteristics that do not have the defects and deformations resulting from the injection step on the finished faces.

### Brief description of the invention

The objective of the present invention are achieved by means of a process for manufacturing a composite material having a finished surface and a mounting surface, which comprises the following steps: step (i): contact heating at least one web provided with natural fibers mixed with synthetic fibers, the heating taking place until at least a temperature that softens the synthetic fibers; step (ii): arranging the web heated in step (i) in the cavities of a mold, followed by pressing; step (iii): cooling the web molded in step (ii) down to at least a temperature that hardens the finish surface; step (iv): injecting plastic resin to form fittings or structural portions in pre-defined regions on the mounting surface; and step (v): cooling the assembly obtained in step (iv) down to a hardening temperature.

The objectives of the present invention are further achieved by providing a composite material obtained by the above-defined process.

### Brief description of the drawings

The present invention will now be described in greater detail with reference to an example of embodiment represented in the drawing.

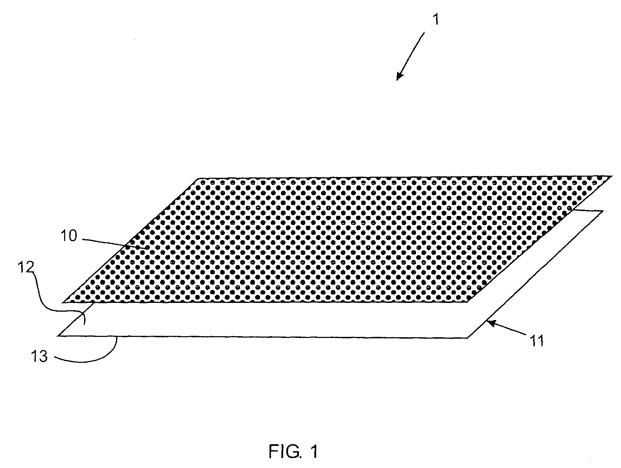

Figure 1 is an exploded view of the material of the present invention in a possible preferred embodiment.

### Detailed description of the figure

The process of the present invention enlarges the field of application, transforming the molded product into applicable natural fiber, competitive in areas where the need for fixing elements of structural characteristics was a limiting factor.

The manufacture process and the composite material 1 resulting from this process of the invention will be described hereinafter on the basis of figure 1, which represents a possible embodiment of the composite material 1.

In general outlines, the process of the present invention uses a new way of interacting components known from the prior art, namely: a mixture of natural and synthetic fibers to create a material that can be applied structurally and/or as a finish in various applications, such as interiors of automobile vehicles.

However, the process employs these components in a specific composition, in steps under particular conditions, so as to obtain a composite material 1 that is provided with fixing elements or regions having structural characteristics, but preventing the excessive expenditure of material, creating deformations on the finish surface (12). It should be further noted that the process of the present invention provides pieces with complex geometry, without the need to use complex molds. In other words, the molds used in the process of the present invention are simple, thus enabling rapid and easy unmounting, even with the existence of fixing elements.

Additionally, the composite material 1 is provided with excellent structural properties, lower weight, good thermo-acoustic properties, good thermal and dimensional stability, recyclability, low cost and is simultaneously an impermeable material with high rigidity, as can be seen hereinafter.

All the characteristics converge to cause the composite material 1 of the present invention to have excellent presentation, which contributes to a high-quality finish. In short, by means of a surface coating, one achieves excellent appearance, resistance and low cost.

In other words, the present invention proposes a process for manufacturing a composite material 1 provided with a finish surface 12 and a mounting surface 13, which comprises the following steps:
- step (i): contact heating at least one web 11 provided with natural fibers mixed with synthetic fibers, the heating taking place until at least a temperature that softens the synthetic fibers;
- step (ii): arranging the web 11 heated in step (i) in the cavities of a mold for pressing;
- step (iii): cooling the web 11 molded in step (ii) down to at least a hardening temperature of the finish surface 12;
- step (iv): injecting plastic resin to form fittings or structural portions in pre-defined regions on the mounting surface 13; and
- step (v): cooling the assembly obtained in step (iv) down to a hardening temperature.

It should be noted that the cost burden of processing a composite material is fundamental for it to be used by the market. Thus, a process that has difficulty in obtaining complex geometries generated a too high cost for overcoming this difficulty. One of the great advantages of the present invention lies especially in the simplicity of the mold used as compared to prior-art molds. The molding of webs by pressing, followed by injection of plastic resin portions, enables one to carry out simple dismounting, even with the existence of injected fixers, which is not possible in injected pieces, because they need compulsorily complex molds.

A material with excessive weight has also its limitations, so much so that, for instance, the automobile industry seeks constantly to reduce weight. Thus, there is a compromise between structural resistance, weight, cost and reliability, which need to go hand-in-hand.

On the other hand, higher weight not always means higher resistance. Although the increase in grams per square meter generates an increase in the strength, taking as an example the weight in grams-per-square-meter of 800g, it will be necessary to have a 30-second heating time, whereas a weight in grams-per-square-meter of 2.500 g will require 70 seconds. This difference in time excludes the chances of commercial success of the second option because of the excessive production cost. Moreover, in spite of the higher load, the weight in grams-per-square-meter of 800g may have higher strength that that of 2500g. This results from the design, the influence of the ribs to increase resistance. In this way, the success of each design and of its strength depends not only on the weight of the piece, but rather on the adhesion relation of the webs with the portion of the injected plastic resin.

### ABOUT THE FIBERS USED

Said webs used in the present process comprise a mixture of natural and synthetic fibers, as discussed before in the prior art.

The mixture of natural and synthetic fibers of the webs 11 is composed by a mixture proportion ranging from 20 to 70% (natural and synthetic fibers), preferably, but not compulsorily of 50% natural fibers and 50% synthetic fibers.

By way of example, the webs 11 used in the manufacture of the present material 1 are composed by natural fibers, which may be fibers of jute, sisal, curauá (*Neoglaziovia variegata*), cotton, flax, or any other type of natural fiber suitable for this function, while this is not a limiting factor for the embodiment of the invention.

In addition to natural fibers, synthetic fibers are used, which may be polypropylene (PP) fibers, polyethylene (PE) fibers, polyethylene terephthalate (PET), or any other synthetic material pertinent to this function. Moreover, these synthetic fibers may be virgin fibers, recycled fibers, or a mixture of both.

It should be noted that the weight of the webs 11 limited to the choice of their composition (composition of the fibers, needling, proportion between one and the other, etc.), although the best results in terms of quality are found in values of grams per square meter whose specific masses are substantially 500g/m2, of course other masses may be used, depending on the application. This too is not a limiting factor. For an increase of load it will be necessary to use greater density and, as a result, greater weight, which will guarantee higher strength.

### ABOUT THE PROCESS

### STEP (i):

As a result of the determined composition of the web (s) 11, step (i) has the objective of heating the web composed by natural and synthetic fibers by the conventional carding and needling method until it begins to soften through contact heating, wherein heat is transferred from the outer portion of the web 11 to its inner portion. The heating is carried in this way, guaranteeing the softening of the synthetic fibers, without deterioration of the natural fibers.

It should be noted that the heating time to reach the temperature sufficient to soften the webs of natural and synthetic fibers is defined case by case. The selection thereof is given as a function of the weight in grams per square meter and composition of the webs and of the process for contact heating.

In this regard, the weight in grams-per-square-meter of the material is defined as a function of the mechanical characteristics required in the final product. The higher the weight in grams per square meter the more energy will be consumed to obtain the best molding condition (softening temperature). With the necessary conditions, one may increase the heating time, the temperature or both.

There is further the possibility of molding from webs that has been pre-compacted by a compression process similar to the molding one cited above, by calendaring or continuous process and, in this case, the subsequent molding may be carried out by heating the webs pre-compacted by irradiation.

### STEP (ii):

The objective of steps (ii) is to provide correct arrangement of the web already heated and softened in the first step (i) in a mold.

Preferably, but not compulsorily, the mold used in step (ii) is one having a cooling system. Such a mold may be made of aluminum, obtained by simple machining, and one may also use a steel mold or any other that proves to be functional. This mold will have, as a particularity, a coupled injector nozzle, so as to enable the injection of step (iv) without having to remove the web 11 from the mold.

After correct arrangement of the web 11, the pressing thereof takes place, jointly with a coating layer 10, if any.

The pressing time and other physicochemical variables involved in this method are inherent in the characteristics of the materials, such as the synthetic fiber of the webs 11 and the coating component 10.

In this regard, one assumes that the pressing, as well as the next step (iii), are carried out for a time sufficient to start the hardening of the material, guaranteeing the final quality of the product. It should be noted that rom the beginning of step (ii) until the end of the present process, the cooling function of the mold is required, that is, the mold is already cooled to remove heat from the pressed assembly. This is due to the need to accelerate the cooling of the webs, thus enabling them to be cooled in a localized and selective manner.

The products obtained in this process phase may have negative angles, a perimeter defined simultaneously with the molding or later.

### STEP (iii)

Step (iii) relates to the cooling of the web 11 molded in step (ii) down to at least a hardening temperature of the finish surface 12. In this way, it is guaranteed that, upon the injection of step (iv), the surface that will have an esthetic function has resistance to further deformation because it has already cooled. However, the mounting surface 13, opposite to the finish surface 12, will be at a higher temperature, so as to increase the parity and adhesion of the injected plastic resin. It should be noted that the cooling takes place with the mold still closed.

Alternatively, between the steps (i) and (iii) there is the possibility of positioning at least one coating layer 10 on an outer face of the composite material 1 to be manufactured, simultaneously with the arrangement of the heated webs 11.

It should be noted that the coating layer 10 is positioned in contact with at least one mold cavity. It is important to point out that the adhesion of the coating layer 10 is simultaneous with the molding, and it is not necessary to apply adhesives. In this way, the adhesion of the coating layer 10 is promoted exclusively by fusing the synthetic fibers.

The coating layer 10 applied has an esthetic function, visually improving the look of the piece, besides providing complementary benefits to improve thermo-acoustic properties, comfort to touch, among others, depending on the choice of the material used for the coating. As an example, one may incorporate a web of non-woven (needled) material with a mixture of polypropylene (PP) and polyethylene terephthalate (PET) fibers. Another example may be achieved by using fabrics, trinitrotoluene (TNT), vinyl and olefin thermoplastics (TPO), as coatings and, depending on the application, carpets, leather, etc.

### STEP (iv)

The overmolding step takes place with the mold still closed. In this step the finish surface 12 is cooled, so that it will not be deformed with the injection of this plastic resin (or any other which may be injected), the mounting surface 13 being at a higher temperature, so as to guarantee greater parity and capability of adhesion with the fixing and structural elements that will be injected.

The form of the overmolding and the reasons where it will take place will de determined by the technical and commercial requirements of the final product, and one may adopt, for the overmolding, the conventional method on horizontal or vertical injecting machines, or one may adapt a system for injection coupled to a press. The characteristics of the overmolding mold are also defined by technical and/or commercial criteria, the degree of satisfaction of both the equipment and the mold being determined by the user of the process.

Moreover, the amount of molding and overmolding cavities and the overmolding to be carried out immediately after the molding are also defined by technical and/or commercial criteria.

### STEP (v)

Finally, step (v) consists in keeping the pressed assembly still in the mold until it is completely cooled, so that the unmolding can take place successfully. In fact, this cooling begins with the pressing of step (iv) itself. Both the cooling time and the temperature that will be achieved to guarantee perfect unmolding are values dependent upon the materials chosen for manufacturing the final composite material 1, according to the need.

Once the composite material 1 is finished, it is possible to aggregate plastic and/or metallic components (such as finishes) by means of adhesive or soldering (vibration, hot plate, ultrasound). It should be reminded that the riveting of the components is also possible. It should be noted that, unlike the prior-art solutions, the product of the present invention has much superior mechanical resistance. Taking an automobile roof as an example, light for illumination is usually fixed on a frame, whereas in the present invention the illuminating assembly may be fixed directly to the composite material, without any frame.

At the end of this process, one obtains the composite material 1, provided with all the properties and characteristics that will be better defined hereinafter.

### ADVANTAGES INHETENT IN THE PROCESS OF THE PRESENT INVENTION

One advantage of the present process consists in total adhesion between the webs 11, 11'. As a result, the composite material 1 has a single anchorage, homogeneously distributed over its surface. The explanation for this phenomenon results from the fact that the intermediate layer 12 undergoes fusion that guarantees its total distribution between the spacing existing between the webs 11, 11', that is, an absolutely homogeneous cohesion.

In this regard, any mechanical stress is distributed over the surface of the composite material 1, not being directed only to the specific or supported anchorage points, as in the prior art (example: only in the gluing points). Thus, the design of the piece may or may not make use of ribs usually applied by the prior art, these ribs seeking to impart additional resistance to the composite material 1. At the moment when the whole structure of the composite material 1 acts to resist load, there is no reason for directing the loads to possible ribs. In this way, the complexity of the molds is also reduced.

It is a further advantage of the manufacture process of the present invention to eliminate at least one mold in comparison with the manufacture methods employed at present. This is because in the present invention the mold used for holding the webs 11, 11', the olefin-based intermediate layer 12 and, optionally, the coating layer 13 is the same mold that promotes cohesion between the layers and, simultaneously, makes the final shaping of the material.

In the present process, once the prototype mold has been chosen, the adoption of the latter as a definitive mold for the production of the material obtained at the end of the process needs only the provision of cooling holes, which may be made by means of a blowtorch. This promotes rapidness of the process, besides reduction of costs by virtue of the fact that it is not necessary to wait for a final mold during days or weeks.

Therefore, as an additional advantage, the present process for manufacturing a material prevents unnecessary wear of the prototype, since it is possible to use the prototype for final molding of the material.

### ABOUT THE COMPOSITE MATERIAL OF THE PRESENT INVENTION

The composite material 1 obtained by the process of the present invention will be better described hereinafter with reference to figure 1. In summary, the composite material 1 of the present invention consists of an aggregate material of various layers that impart to it high strength, low weight, impermeability, good thermo-acoustic properties, thermal and dimensional stability/insolation, recyclability and low cost.

In essence, the composite material 1 is provided with at least one first web 11 and at least one second web 11', each composed by natural and synthetic fibers, the first and second webs 11, 11', being associated to each other by means of an olefin-based intermediate layer 12. In this way, the composite material 1 may contain numerous intercalated associated layers as described, that it, always with an intermediate layer 12.

Alternatively, one may add at least one coating layer 13 on at least one face of the composite material 1. Taking a vehicle door as an example, where its lining comprises the composite material 1 of the present invention, the lining portion facing the vehicle interior may receive a coating 13 so as to provide the desired finish, such as fabric, leather, etc. naturally the coating 13 will depend on the application of the product, but in order to have a broad idea of the possibilities, the composite material 1 may also be used as the finish of a false ceiling of a building and, in this case, the coating 13 may be of a material capable of receiving a painting.

By way of example, the webs 11, 11' are composed by natural fibers, which may be fibers of jute, sisal, curauá (*Neoglaziovia variegata*)*,* cotton, flax, or any other type of natural fiber suitable for this function.

As presented before, it is important to point out that the main advantages of using the natural fibers of the present composite material 1 are: abundance, low cost, low density, easiness to obtain and maintain, non-toxicity, low abrasion, biodegradability, and the ecological and renewable aspect. All these positive characteristics are aggregated to the composite material 1 presented herein.

Besides, synthetic fibers are added to the natural fibers, the material of which may be, for example, polypropylene (PP) fibers, polyethylene (PE) fibers, polyethylene terephthalate (PET), or any other synthetic material pertinent to this function. Moreover, these synthetic fibers may be virgin fibers, recycled fibers, or a mixture of both.

As far as the olefin-based intermediate layer 12 is concerned, it is present between the first and second webs 11, 11', regardless of the number of times this assembly is repeated. In other words, the assembly of the first web 11 united to the second web 11' by means of the intermediate layer 12 may repeat itself consecutively. In this way, this 3-layer composite assembly may repeat itself a number of times to form the composite material 1; suffice it to add an intermediate layer 12 to one of more of the webs, so that it can associate itself to a new web so as to reach the desired thickness. In this way, the composite material may serve to produce both a thin shelf and a house door.

Of course, the olefin-based intermediate layer 12 is chosen according to the choice of the synthetic fibers of the webs 11, 11', since the association of the webs 11, 11' takes place by means of chemical interaction between the molten intermediate layer 12 and the molten synthetic portion of the first and second webs 11, 11'. Affinity between these two portions will guarantee correct/stable association of the webs 11, 11'.

Preferably, but not compulsorily the layer 12 is a polypropylene (PP), polyethylene (PE) foam or any other physically articulated component suitable for this function, which is equivalent to saying that it must have excellent adhesion to the adjacent webs and be a good heat insulator. It should be noted that the intermediate layer may also be applied as a liquid or even a spray, while guaranteeing the amount necessary for adhesion between the first and second webs 11.

An additional advantage of the present invention is the capability of the composite material to promote heat insulation. Considering the application of a car-roof coating, this additional thermal protection becomes a great comfort for the user. On the other hand, the present invention does not undergo deformations typically existing in solutions found in the prior art. It should be noted that, since the intermediate layer 12 acts as a heat insulator, it guarantees that the heat will not pass from one web to the other. In this way, the actuating traction forces and a first web 11 are annulled by the opposite force of a second web 11, the latter forces being higher because the second web is at lower temperatures, thus being more capable of resisting actuating internal forces/stresses. This fact is easily confirmed in a hot-bench test, typically carried out by the industries that consume these composite products.

On the other hand, one may apply a coating layer 13, as indicated before, its function being both esthetic, to improve the visual aspect of the piece, and functional, wherein it may be prepared to receive plaster or painting, or even a metallized finish. In other possible examples, one may incorporate a web of non-woven (needled) material with a mixture of polypropylene (PP) and polyethylene terephthalate (PET). Another example may be achieved by using fabrics, trinitrotoluene (TNT), vinyl and olefin thermoplastics (TPO) as coatings and, depending on the application, also carpets, leather, etc.

Thus, the choice of the material used for the coating 13 provided complementary benefits to the effect of improving thermoacoustic properties, comfort to touch, among others.

### ADDITIONAL ADVANTAGES

Considering the advantages provided by the composite material 1 and the portion injected in a subsequent step by pressing molding, the present invention has a lower price per piece.

It should be noted that the strength aspect is a result of the weight in grams per square meter and of the proportion between the natural and synthetic fibers that compose the webs 11 of the composite material of the present invention, as well as of the number of webs used.

Indeed, by varying the weight in grams per square meter of the webs 11, one varies the strength of the composite material 1, a characteristic that defines an imperious factor for determined applications, for instance, structural applications in civil engineering.

One should also mention the low weight exhibited by the present composite material 1, which results from the use of natural fibers in the composition of the webs 11. By way of example, the main components of natural fibers may be: cellulose, hemicellulose, lignin, pectins, extractive ( low-molecular weight components), all these components being of low density, which, as a result, reduces the weight of the composite material 1.

In this regard, the impermeability characteristic acquired by the composite material 1 presented herein eliminates the drawback of using natural fibers, which have hygoscopic nature. Thus, the absorption of moisture is negligible, making the products washable, it being enough for the coating 10 to be adequate for this function.

In this regard, the use of natural fibers mixed with synthetic fiber for the composition of the webs 11 brings advantages to the product, and for this type of fibers the energy necessary for their production is comparatively little, and their manufacture costs are reduced. Besides, they are abundant, inexpensive and do not require a high degree of industrialization during their processing.

Besides, the natural fibers act on the microcracks of the composite material 1, thus improving the mechanical properties thereof, such as resistance to fractures, elasticity and flection, besides providing greater resistance to impacts, since the natural fibers, being long and interwoven, become deformed, but do not break, imparting to the composite material a higher elastic limit than the prior-art solutions. More specifically, the cellulose fibers that compose natural fibers are aligned along the fiber length, which results in maximum tensile strength and bending strength, besides providing rigidity on the fiber axis, being therefore an anisotropic material.

The characteristic of dimensional stability achieved by the product presented herein also results from the admission of natural fibers in its composition. In other words, natural fibers keep the composite material 1 contraction-free, dispensing with compensations in the manufacture of the molds and also inhibit dilatation when they are exposed to sunshine. It should be noted that the materials do not cool uniformly in a mold, which generates internal stresses. The solution presented herein does not undergo such contractions, which guarantees the dimensional stability explained.

Aiming at a further very important characteristic, the comfort of the composite material 1 is achieved with much success by means of these components that compose it. The efficient thermoacoustic insulation achieved produces a feeling of comfort, since in both high and lower temperatures the composite material 1 acts as a barrier that keep the balance. Additionally, the choice of the coating layer 10 in at least one external face of the material may modify completely the application thereof according to the need, comfort required and properties of the material like impermeability, thermoacoustic insulation, flexibility, strength and rigidity.

Moreover, the "sustainable" factor inherent in the natural fibers used and the "recyclable" factor achieved by the composite material 1 have presently determinant consequences in the costs of production, stocking, selling and choice of the consumer, who tends to opt for products that are produced with some environmental concern.

The 2-stage overmolding as shown in the present invention do not have the drawbacks found in the prior art and requires lower investments (more simple molds), which enables, during the prototyping phase, using the tools and transforming it definitively. Thus, the overmolding aims at increasing the advantages of the molded product, providing it with fixing elements, profiles with the function of structuring, union of components, achieving reduction of weight and better strength of the mold and eliminating the need to glue components through additional processes that made the final product expensive, such as ultrasound welding, hot-plate, vibration, among others.

In order to have an idea of the impact of the present invention, the stocking and transportation costs are reduced, since the products made with the composite material 1 may be rested on only two points, since the whole material acts as a resistance element. In the prior-art materials, the critical points of the piece have to be rested carefully, so that they will not break, since the structural resistance of the material is concentrated on ribs.

With regard to the recyclability of the composite material 1 of the present invention, the ground residues from manufacture process and/or from disposal of the final product may be added as a feed in injection and/or extrusion processes, or even incinerated without damaging the environment.

Apart from that, this composite material 1 can be applied in the most varied areas and can be transformed into products that go from the application on automobiles to the construction sector, furniture finish industry, etc. More specifically, this material can be used, in addition to other areas, in:
▪ Automotive industry:
   - roof coating
   - column coating
   - door - packages
   - glove-compartment cover
   - object holder
   - suitcase floor
   - column coatings
   - thermoacoustic insulation
   - back and side coatings for utility vehicles
   - floor carpets
   - finishes with structural function
▪ Civil engineering
   - roof finishes
   - partition walls
   - panels, as for example, thermoacoustic panels
   - doors
   - furniture
▪ Shipbuilding and aircraft industry
   - panels for coating cabins and side coatings
   - roof coating
   - seat coating
   - floors

Thus, the present invention proposes a composite material 1 capable of guaranteeing a compromise between industrial viability, strength, reduction of weight and geometric complexity that were never before aligned by means of a composite material provided also with fixing elements or structural characteristics.

Preferred examples of embodiment having been descried, one should understand that the scope of the present invention embraces other possible variations, being limited only by the contents of the accompanying claims, which include the possible equivalents.

## Claims

1. A process for manufacturing a composite material (1) provided with a finish surface (12) and a mounting surface (13), **characterized by** comprising the following steps:
• Step (i) - contact heating of at least one web (11) provided with natural fibers mixed with synthetic fibers, the heating taking place up to a temperature that softens the synthetic fibers;
• Step (ii) - arranging the web (11) heated in step (i) in the cavities of a mold, followed by pressing;
• Step (iii) - cooling the web (11) molded in step (ii) down to at least a hardening temperature of the finish surface (12);
• Step (iv) - injecting plastic resin to form fittings or structural portions in pre-defined regions on the mounting surface (13); and
• Step (v) - cooling the assembly obtained in step (iv) down to at least a hardening temperature.

2. The process for manufacturing a composite material (1) according to claim 1, **characterized in that** the web (11) comprises at least the natural fibers of the type jute, sisal, curauá (*Neoglaziovia variegata*)*,* cotton or flax, used either in isolation or in conjunction.

3. The process for manufacturing a composite material (1) according to claim 1, **characterized in that** the synthetic fibers are polypropylene.

4. The process for manufacturing a composite material (1) according to claim 1, **characterized in that** in step (ii) a coating (10) of PVC, TPO, fabric, leather or carpet may be arranged.

5. A composite material (1) obtained by the process as defined in claims 1 to 4.
